# EUROPEAN PATENT SPECIFICATION

(11) **EP 3 754 307 B1**
(45) Date of publication and mention of the grant of the patent: **19.07.2023**
(21) Application number: 20180494.5
(22) Date of filing: 17.06.2020
(51) Int. Cl.: G01F 7/00, G01F 15/063, G01F 15/075, G01F 15/14, G01D 4/00, G01F 15/00

(54) **APPARATUS FOR GAS MEASURING**
GERÄT ZUR GASMESSUNG
APPAREIL DE MESURE DE GAZ

(30) Priority: 17.06.2019 IT 201900009195
(43) Date of publication of application: 23.12.2020
(73) Proprietor: Pietro Fiorentini S.p.A., 36057 Arcugnano (VI) (IT)
(72) Inventor: CERAMI, Pietro, 20822 Seveso (MB) (IT); SENATORI, Leonardo, 20143 Milano (MI) (IT)
(74) Representative: Braidotti, Andrea

(56) References cited:
- EP-A2- 2 522 961
- US-A1- 2012 137 126
- US-A1- 2018 088 599

## Description

The present invention relates to an apparatus for measuring gas, and in particular of the type suitable for measuring the flow of gas present and circulating within a pipe, such as for example a pipe of the natural gas distribution network.

Currently, so-called "Smart Meters" are known - also called "remote controlled meters" - which are now widely used in the measurement of consumption (private and industrial) of the amount of energy consumed in the form of gas.

In particular, these known devices comprise two electronic modules:
- a first module which is installed inside the housing containing the measuring device and is therefore in contact with the gas that enters and/or circulates inside the device itself, and
- a second module which is installed outside the casing, generally in correspondence with one of its walls, and is not in contact with the gas.

In more detail, the first module (inside the casing) includes the sensors configured to detect a series of quantities (generally of flow rate, and/or pressure and/or temperature) relating to the gas that enters and circulates inside the apparatus, and this in order to then calculate the corresponding volume; the first module is also equipped with a microprocessor connected to the sensors. The second module (external to the housing) comprises a further microprocessor which processes the signals representative of the quantities detected by the first internal module and calculates any derived quantities. Furthermore, the second module comprises a display for viewing the values relating to the quantities received and/or calculated, and/or includes means for their remote transmission.

Both modules are generally powered by a battery, which can be non-replaceable or replaceable entirely, or even only partially.

In current solutions, moreover, the second external module is integral with the casing of the apparatus so that once the latter has been assembled in the factory, it is no longer possible to separate it. In particular, for this purpose, mechanical locks and/or seals are used which prevent the removal of the second external module, if not by tampering with the apparatus itself, thus invalidating the measurement of the gas (obtained by means of said apparatus) which is legally recognized. In particular, this is necessary to safeguard the metrological functions and the information contained in said second module and which are used to measure gas consumption according to the regulations envisaged in the sector.

It therefore follows that, currently, in the event of failure of the microprocessor of the second external module or of a component of the latter having a metrological value (and therefore subject to certification by an authorized third party) - such as, for example, display breakage, sensor faults of the second external module which contribute to the volume measurement function, non-replaceable battery faults, etc. - replacement of the entire apparatus is required.

It is easy to understand how the replacement of the entire apparatus (meter) - particularly in the case of large devices/meters that operate with industrial users - is particularly undesirable as it is burdensome in terms of cost, as well as for the waste of the components still functioning of the apparatus which then must be properly recovered or disposed of.

Furthermore, since the measuring device is normally placed at the end of a pipe, in order to allow its replacement, it is necessary to block the gas supply, with consequent inconvenience for the user.

US2018/0088599 describes an apparatus in which in the first module, inside which gas enters and circulates, the measurement sensors of a series of quantities relating to gas are housed, a first processor and a first memory. In particular, said first processor, provided inside the first module, sends the detections of the sensors to the first memory, provided inside said first module, for their storage. Furthermore, the apparatus comprises a second external module, inside which a further/second processor and a further/second memory are housed. In particular, the second processor receives the metrological information from the first module, processes it and stores it in the second memory of the second external module.

EP2522961 discloses a solution of a modular sensor assembly provided with a sensing module and a separate signal processing module. The sensing module is provided with a sensor and a local memory device for storing conditioning coefficients, information and data relevant for the sensor, while the signal processing module comprises a microprocessor and a memory, and moreover is programmed to download the conditioning coefficients that are specific to the sensor and that are stored in the local memory, and to use these conditioning coefficients to produce a highly accurate output signal indicative of the parameter being sensed. Moreover, the data of the output signal processed by the signal processing module are stored in the memory of the signal processing module and/or transferred to an end-user device.

The object of the invention is to propose an apparatus for measuring gas which allows to overcome the above mentioned drawbacks present in traditional solutions.

Another object of the invention is to propose an apparatus which can be partially modified without having to undergo a new and further certification.

Another object of the invention is to propose an apparatus which, even in the event of failure of the external module, does not require replacement of the entire apparatus.

Another object of the invention is to propose an apparatus which, even following a failure of the external module, maintains and guarantees its functionality.

Another object of the invention is to propose an apparatus which allows the replacement in the field of its more easily perishable components.

Another object of the invention is to propose an apparatus which keeps information related to gas measurement safe from physical and/or IT tampering.

Another object of the invention is to propose an apparatus which is an improvement and/or alternative with respect to the traditional ones.

Another object of the invention is to propose an apparatus which has high safety standards.

Another object of the invention is to propose an apparatus which can be manufactured simply, quickly and at low costs.

Another object of the invention is to propose an apparatus which presents an alternative characterization, both in construction and functional terms, with respect to the traditional ones.

Another object of the invention is to propose an apparatus which, even following a failure of the external module, can allow the recovery of the information (for example of consumption) processed and/or detected up to the moment immediately prior to the failure itself.

All these objects, both alone and in any combination thereof, and others which will result from the following description are achieved, according to the invention, with an apparatus as defined in claim 1.

The present invention is further clarified below in some of the following his preferred forms of practical embodiment, given purely by way of non-limiting example with reference to the attached table of drawings, in which:
Figure 1 shows a schematic view of an apparatus according to the invention,
Figure 2 shows it in a schematic view in a different embodiment.

As can be seen from the figures, the apparatus 1 according to the invention is of the type configured to perform a series of measurements on the gas 30 which passes through said apparatus. Preferably, the apparatus 1 is an apparatus of the type generally used as a gas 30 flow meter or meter which passes through the section of a pipe on which said apparatus is installed.

In particular, the apparatus 1 according to the invention is configured to be crossed, at least in part, by a flow of gas.

Suitably, the apparatus 1 can be associated with a gas inlet 3, for example defined by a pipe section upstream of the apparatus, and with a gas outlet 5, for example defined by a pipe section downstream of said device.

Suitably, the apparatus 1 is provided with a containment casing 7 in which the following are defined:
- a first opening 9, which is fluidly in communication with the inlet 3, to allow the gas 30 to enter inside said casing, and
- a second opening 11, which is fluidly in communication with the outlet 5, to allow the gas 30, which has entered/circulated in said casing, to escape from the latter.

Preferably, the containment casing 7 is watertight to prevent the escape of gas to the outside. Preferably, it is formed by two or more parts joined together so as to guarantee the tightness of the entire casing. Preferably, the containment casing 7 is made of metal, in particular of sheet metal.

Conveniently, inside the casing 7 there is a gas flow shut-off valve which passes through the apparatus and is directed towards the outlet 5.

The apparatus 1 comprises a first module 4 which is housed inside the containment casing 7. Conveniently, the first module 4 comprises at least one sensor 2, preferably a plurality of sensors which are configured to detect corresponding quantities of the gas 30 flow which enters and passes through said apparatus 1.

Preferably, the sensors 2 comprise a corresponding sensor for detecting the flow rate, pressure and/or temperature of the gas 30 entering and/or passing through the apparatus 1. The sensor or sensors 2 are traditional in themselves and, therefore, will not be further described.

Conveniently, the sensor(s) 2 of the first module 4 can be of the mechanical or electronic type. Conveniently, said first module 4 can only be defined by said at least one sensor 2. Advantageously, in a possible embodiment, exclusively said at least one sensor 2 is housed inside the casing 7.

Preferably, the sensor 2 of the first module 4 can comprise a flow sensor of the mechanical type, i.e. without electronic components or circuits. Conveniently, for example, the sensor 2 can be of the membrane type and comprises a traditional mechanical system (for example comprising a crank mechanism connected to a pin) which is associated with a system (encoder and optical sensors) for detection and conversion into electronic pulses; advantageously, the only mechanical system is housed inside the casing 7, while the detection and conversion system is provided outside the casing 7 and can be connected to a corresponding calculation and management electronics (for example defined by the external electronic unit 25) which is also provided outside the casing 7.

Conveniently, no electronic control and/or processing unit is provided inside the first module 4, and in particular no microprocessor or microcontroller is provided.

The apparatus 1 comprises a second module 20 which is positioned outside the casing 7 and preferably is associated with the external surface of a wall of said casing. Conveniently, the second module 20 is housed inside a second casing, preferably of plastic.

Conveniently, the second module 20 comprises an electronic processing and/or control unit - hereinafter an external electronic unit 25 - which, preferably, is defined by an electronic card (for example a printed circuit PCB) in which a microprocessor or a microcontroller.

Conveniently, said at least one sensor 2 of the first module 4 is connected directly to the external electronic unit of the second module 20 which is external to said containment casing 7. In particular, the external electronic unit 25 is configured to receive the measurement carried out by said sensor(s) 2 and, in particular, to receive electrical signals (preferably digital) representative of the quantities detected by said sensor(s) 2 of the first module 4.

The apparatus 1 comprises a single and only electronic unit for processing and/or control 25, and in particular there is a single microprocessor or microcontroller, which is external with respect to the casing 7 in which the gas enters and circulates. This is particularly advantageous with respect to the known solutions in which a processor is also provided inside the casing, as it allows to decrease the construction complexity and the cost of the apparatus 1, and at the same time increase its reliability.

Advantageously, the second module 20 also comprises a user interface 16 - for example a push-button panel associated with a display or a touch-screen display - configured to allow the user to interact with the external electronic unit 25 of said module 20. Conveniently, the display shows the data received and/or processed by said external electronic unit 25.

Advantageously, the second module 20 also comprises remote communication means 23, preferably transmission or transceiver means with a possible remote unit. Conveniently, said transmission or transceiver means can be of the wireless type (in particular via infrared or via radio, for example Wi-Fi). Suitably, these transmission or transceiver means 23 can be connected and/or integrated in the electronic card of the external electronic unit 25 of the second module 20. Preferably, the communication means 23 can be configured to allow the apparatus 1 to interact and exchange data and/or information and/or commands with an external portable device (not shown), such as a smartphone or tablet. Advantageously, the communication means 23 can be configured to allow the apparatus 1 to interact and exchange data and/or information and/or commands with a remote processing unit. Preferably, the remote unit can define an external central unit (remote) which is configured to receive information from one or more apparatuses 1.

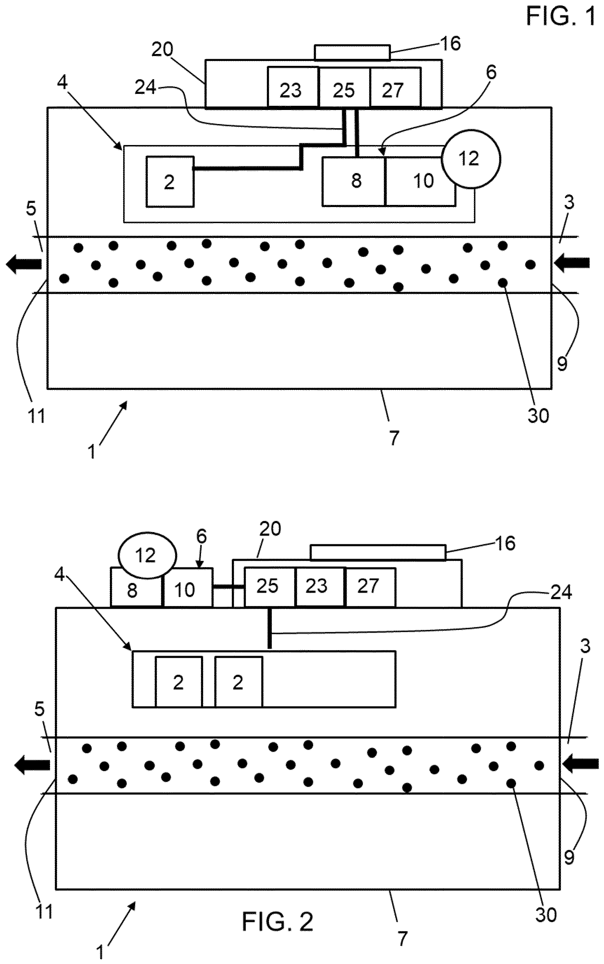

The apparatus 1 also comprises at least a memory unit 6 which is independent and external with respect to the casing of said second module 20 and, suitably, it cannot be removed together with the latter. In particular, the memory unit 6 - which is always housed outside the second module 20 and which is independent of the latter - can be housed inside the casing 7 (see fig. 1) or it can be associated with the outside of said casing (see fig. 2).

The memory unit 6 is electronically connected with the external electronic unit 25 of the second module 20 which is external to the casing 7.

Conveniently, the memory unit 6 is defined by an electronic card which houses a memory, preferably non-volatile, for example a ROM or EPROM or EEPROM or flash memory, and/or even volatile, for example RAM.

Advantageously, as represented in the embodiment of fig. 1, the memory unit 6 can be housed inside the casing 7, preferably inside the first module 4 but it could also be housed inside the casing 7 but outside the first module 4. Advantageously, this embodiment is used in particular when electric or electronic sensors 2 are provided, such as for example ultrasonic, thermo-mass, Coriolis effect, etc. Conveniently, the memory unit 6 can be integrated in an electronic card provided inside one or more of said sensors 2 of the first module 4.

Alternatively, as represented in the embodiment of fig. 2, said at least one memory unit 6 can be positioned outside the casing 7 - for example it can be fixed (directly or by means of further components) to a wall of said casing - and, preferably, it is associated with or provided with a guarantee seal/protection of the integrity and non-tampering of the memory unit itself. This embodiment is particularly advantageous in that it avoids inserting the memory unit inside the casing 7 in which the gas enters and circulates, thus simplifying the assembly of the apparatus 1 and also improving its reliability. In more detail, preferably, the memory unit 6 is mounted on a board which is provided with an electrical connector for connection with the external electronic unit 25 and which is fixed (for example it is attached and sealed) to the external wall of the casing 7; suitably, the board is then covered by or contained in a special casing.

Advantageously, in a possible embodiment of the apparatus 1, inside the casing 7, in which the gas enters and circulates, only a first module 4 is provided in which only the mechanical part of at least one flow sensor 2 is housed of the mechanical type, such as for example a sensor of the membrane type; furthermore, the memory unit 6 is provided outside the casing 7 and can be removed independently from the second module 20 (also provided outside the casing 7), in which the external electronic unit 25 is housed. This embodiment is particularly advantageous in that it can be used with meters having mechanical counting systems since no electronic component or circuit is housed inside the casing 7.

Advantageously, the first module 4, housed inside the casing 7, and the second module 20, provided outside the casing 7, are connected by means of connection means 24, preferably electrical, for example a signal transmission cable electrical, preferably a flat cable of the "FFC" type. Suitably, the electric cable can pass from the inside to the outside of said casing 7 in correspondence with the contact areas provided between the flanges of two half-shells defining said casing (as provided for example in EP2810024 or EP300256) and/or at a passage opening, suitably sealed, defined in a wall or at said flanges. In particular, by means of the connection means 24, the external electronic unit 25 of the second module 20 can be connected to the sensor/s 2 of the first module 4.

Conveniently, moreover, means are provided for the electrical connection of the external electronic unit 25 (housed inside the second module 20) with the memory unit 6 (housed outside the second module 20), so as to allow data transmission between them. Advantageously, in the embodiment in which the memory unit 6 is housed inside the casing 7, said electrical connection means can correspond - at least in part - to said connection means 24.

Advantageously, the second module 20 also comprises within it at least one source 27 of electrical energy for the components of the second module itself (i.e. both for the external electronic unit and/or the means of remote communication) and for the components of the first module (in particular for the sensor(s)). Preferably, said at least electric power source 27 comprises at least one storage unit (battery or cell) which is connected directly or by means of the electronic card of the external electronic unit 25 to the various components in order to supply the electric power for their operation.

Advantageously, said at least one memory unit 6 is configured to store a plurality of information relating to the manufacturing characteristics of the apparatus 1 and also relating to the operation of said apparatus.

Preferably, the memory unit 6 comprises a first writeable and/or rewritable zone (partition) 8 and a second read-only zone (partition) 10 (i.e. non-writable/rewritable). Suitably, while the first zone 8 can also be written during the operation of the apparatus 1, the second zone 10 can be written only at the time of production/assembly and/or installation of the apparatus 1.

Suitably, said first zone 8 and said second zone 10 can be defined in the same memory unit 6 or in two distinct memory units 6.

Advantageously, as mentioned, access to the memory unit 6 is prevented by one or more seals 12 which must necessarily be tampered with in order to access the memory unit itself. In this way, therefore, any intervention, tampering or removal of the memory unit 6 can be suitably and immediately identified. Preferably, said seals 12 can comprise adhesive portions, padlocks, wires, or any other means which is suitable for the purpose. Preferably, said seals 12 can comprise means of mechanical engagement between two or more pieces, means that are configured so that, once defined/activated said mechanical engagement, this can be removed - and therefore the corresponding pieces can be separated - only by breaking , at least in part, or by causing visible/evident and permanent damage to the pieces themselves and/or said means. In other words, said means are configured to define a non-removable engagement, if not causing the corresponding breakage or damage.

Conveniently, the parameters useful for metrological purposes can be stored in the second zone 10, in particular for the calculation of volumes, such as for example the cyclical volume of the apparatus, the calibration coefficients of the sensors, the error normalization coefficients, others calibration parameters, etc.

Advantageously, in the second zone 10 the manufacturing parameters of the apparatus 1 can be stored, such as for example the serial number, the year and/or the manufacturing batch of the apparatus 1, the manufacturer's identification code, the serial number and/or the identification code of the first module 4 and/or the second module 20, other traceability/identification data of the apparatus, etc.

The electronic unit 25, which is housed in the second module 20 external to the containment casing 7, is configured to send and write (and thus memorize) inside the memory unit 6 - which is housed inside the containment casing 7 or which is associated externally to said casing independently of the second module - the data detected by the sensor(s) 2 and/or the results of the processing carried out from said data and/or other information and/or events relating to the operational functioning and to the "life"/"history" of the apparatus 1.

Conveniently, in the first zone 8 a series of information relating to the operational functioning of the apparatus 1 can be stored, such as for example the values of the volume totalizers, diagnostic information or other information related to particular events.

Conveniently, the first zone 8 of the memory unit 6 is connected with the external electronic unit 25 of the second module 20 to receive from it, and therefore store, the information relating to the operation of the apparatus 1 (and appropriately received by the sensor(s) 2 and/or calculated by said external electronic unit 25).

Advantageously, for this purpose, the external electronic unit 25 of the second module 20 is programmed so that, during normal operation of the apparatus, it sends at a certain frequency - which can be predefined or settable - to the memory unit 6, and preferably to the first zone 8 of the latter, the information relating to the operation of the apparatus 1, which is thus written and stored in said memory unit 6.

Advantageously, when in an apparatus 1 the second module 20 is replaced - for example because damaged - by a new second module, the external electronic unit 25 of the latter is also programmed to read, and therefore acquire, the content of the entire memory unit 6 (preferably both of the first zone 8 and of the second zone 10). In particular, it is understood that the new second module 20 replaces the previous one and, therefore, is electronically connected to the memory unit 6 and/or is associated with the electrical connection cable of the first module housed inside the housing.

Advantageously, the second module is configured so that, once associated with the apparatus 1, it sends a special signal to the first module and/or to the memory unit 6 to enable the reading of the contents of the memory unit itself. Conveniently, therefore, the new second module learns the contents of the first memory zone 8 and the second memory zone 10 and, in particular, automatically learns both the parameters useful for metrological purposes, in particular for the calculation of volumes, and the information relating to the (historical) operation of the apparatus 1 before the functional shutdown of the second damaged module, in particular relating to the last value of the volume totalizers and/or other diagnostic information processed.

Advantageously, the content of the first zone 8 and/or - preferably - of the second zone 10 is encrypted, preferably by means of an AES-type encryption algorithm with a 128-bit block size and an authentication key of at least 128 bits. Therefore, the parameters present in the first zone 8 and/or - preferably - in the second zone 10 cannot in any way be modified/tampered with/deleted, thus preserving their authenticity and integrity.

Suitably, therefore, the integrity of the memory unit 6 from the physical point of view is obtained by providing for its insertion inside the casing 7 and/or by the use of one or more seals 12, while the integrity of the content (i.e. stored data) of memory unit 6 is obtained by encrypting - at least a part of - said content, thus protecting it in reading and/or writing also from an attempt of tampering of the "wireless" type.

Suitably, moreover, the reading and display of the contents of the first zone 8 and/or of the second zone 10 is subject to passing an authentication system, for example by password.

Suitably, therefore, once the apparatus 1 has been constructed and sealed metrologically, the memory unit 6 - and in particular the content of the first zone 8 and/or second zone 10 - is protected and cannot be altered.

In essence, the memory unit 6 acts essentially as a "black box" of the apparatus 1, in that it contains the data and information necessary for the operation of the apparatus and also records the data and information relating to the operation of the apparatus, while ensuring their integrity and authenticity, and this in order to make them available afterwards to the new second module which replaces the previous second module which has failed. Suitably, therefore, the new second module can obtain all the information suitable for keeping the operation of the apparatus 1 intact, thus avoiding the need for its complete replacement in the event of damage to the second module, and can also obtain information relating to the historical and previous operation of the apparatus itself.

From what has been said it is clear that the apparatus 1 according to the invention is more advantageous than traditional devices in that it allows a replacement, which can be carried out in the field and which is legally/normally accepted from a metrological point of view (in particular according to what provided for by the R137-1-2 regulation of the International Legal Metrology Organization), of the second module of the device (module that is generally easily perishable or more prone to breakdown), thus reducing the time and costs deriving from the replacement of the entire device.

## Claims

1. Apparatus (1) for measuring gas (30), in particular of the type suitable for measuring the flow of gas (30) present and circulating within a pipe, comprising:
- a containment casing (7) provided with a first opening (9) for the gas inlet inside it and a second opening (11) for the gas outlet,
- a first module (4) which is housed inside said containment casing (7) and which comprises at least one sensor (2) for detecting a corresponding quantity of the gas (30) flow which passes through and/or circulates in said apparatus (1),
- a second module (20) which is associated externally to said containment casing (7),
- a single and only one processing and/or control unit which is defined by an external electronic processing and/or control unit (25) which is housed in said second module (20) and which is electronically connected to said at least one sensor (2) to thus receive the detections made by said at least one sensor (2),
- at least one memory unit (6):
- which is external and independent of said second module (20) so that said second module (20) is removable and/or dissociable from said containment casing (7) independently of said at least one memory unit (6)
- in which parameters useful for metrological purposes are stored in an unchangeable way,
- and **characterized in that**: said at least one memory (6), that is external and independent of said second module (20), is electronically connected with the external electronic processing and/or control unit (25) of said second module (20) external to the containment casing (7), for receiving and storing information processed by said external electronic processing and/or control unit (25) of said second module (20) and relating to the operation of said apparatus (1),
- the external electronic processing and/or control unit (25) of the second module (20) is configured so that, during normal operation of the apparatus, it sends the information relating to the operation of the apparatus (1) to the at least one memory unit (6), thus allowing the storage of said information in said at least one memory unit (6).

2. Apparatus according to claim 1, **characterized in that** the at least one memory unit (6) is housed inside said containment casing (7).

3. Apparatus according to claim 1, **characterized in that** the at least one memory unit (6) is fixed externally to said containment casing (7) so that said second module (20) becomes removable and/or separable from said containment casing (7) independently of said at least one memory unit (6).

4. Apparatus according to the preceding claim, **characterized in that** no electrical and/or electronic component is housed inside said containment casing (7).

5. Apparatus according to claims 1 or 2, **characterized in that** said at least one memory unit (6) is housed within said containment casing (7), inside said first module (4).

6. Apparatus according to claims 1 or 2, **characterized in that** said at least one memory unit (6) is housed inside said containment casing (7) but outside of said first module (4).

7. Apparatus according to one or more of the preceding claims, **characterized in that** said at least one memory unit (6) is associated with and/or provided with at least one seal (12) for warranty/protection of its integrity and not tampering.

8. Apparatus according to one or more of the preceding claims, **characterized in that** said at least one memory unit (6) comprises:
- a first writable and/or rewritable zone (8) in which said information relating to the operation of the apparatus (1) is stored, preferably relating to the values of the volume totalizers, diagnostic information and/or other information related to particular events, and
- a second read-only zone (10) in which said parameters useful for metrological purposes are stored in an unchangeable way.

9. Apparatus according to claim 8, **characterized in that** in said second read-only area (10) of said at least one memory unit (6) are also stored, in an unchangeable way, identification and/or manufacturing parameters of said apparatus (1).

10. Apparatus according to claim 8 or claim 9, **characterized in that** in said at least one memory unit (6), and preferably in said first writable and/or rewritable zone (8), are stored:
- the data detected by said at least one sensor (2), and
- the results of the processing carried out by said external electronic unit (25) starting from the data detected by said at least one sensor, and
- events related to the operational functioning of the apparatus (1).

11. Apparatus according to one of the claims 8, 9 or 10 **characterized by** the fact that the contents of said first writable and/or rewritable zone (8) and/or said second read-only zone (10) is protected by encryption.

12. Apparatus according to one or more of the preceding claims, **characterized by** the fact that the external electronic processing and/or control unit (25) of the second module (20) is configured so that, as a result of its connection to the first module (4) and/or all the at least one memory unit (6), it reads and acquires - preferably automatically - the content of the parameters and information present in said at least one memory unit (6).

13. Apparatus according to one or more of the preceding claims, **characterized in that** said at least one of said first sensor (2) of said module (4) is of mechanical type, preferably a membrane, and comprises a mechanical system that is housed inside said containment casing (7) into which the gas enters and circulates.

14. Apparatus according to one or more of the preceding claims, **characterized in that** said second module (20) comprises in its interior:
- an electric power source (27) for the components of the second module (20) and/or for the components of the first module (4), and/or
- a user interface (16) configured to allow the user to interact with said device (1) and to view the data received and/or processed by said external electronic unit (25) of the second module (20),
- remote communication means (23) for interacting with an external portable device and/or with a remote unit.

15. Apparatus according to one or more of the preceding claims, **characterized in that** the at least one memory unit (6) is configured in such a way that the reading and display of its contents is subject to passing an authentication system, such as a password.

## Patentansprüche

1. Gerät (1) zum Messen von Gas (30), insbesondere des Typs, der zum Messen des Durchflusses von Gas (30) geeignet ist, das in einer Leitung vorhanden ist und zirkuliert, umfassend:
- ein Sicherheitsgehäuse (7), das mit einer ersten Öffnung (9) für den Gaseinlass und einer zweiten Öffnung (11) für den Gasauslass versehen ist,
- ein erstes Modul (4), das im Inneren des Sicherheitsgehäuses (7) untergebracht ist und mindestens einen Sensor (2) zum Erfassen einer entsprechenden Menge des Gasstroms (30) umfasst, der durch das Gerät (1) strömt und/oder in ihm zirkuliert,
- ein zweites Modul (20), das außerhalb des Sicherheitsgehäuses (7) angeordnet ist,
- eine einzige Verarbeitungs- und/oder Steuereinheit, die durch eine externe elektronische Verarbeitungs- und/oder Steuereinheit (25) definiert ist, die in dem zweiten Modul (20) untergebracht ist und elektronisch mit dem mindestens einen Sensor (2) verbunden ist, um so die von dem mindestens einen Sensor (2) vorgenommenen Erfassungen zu empfangen,
- mindestens eine Speichereinheit (6):
- die extern und unabhängig von dem zweiten Modul (20) ist, so dass das zweite Modul (20) unabhängig von der mindestens einen Speichereinheit (6) von dem Sicherheitsgehäuse (7) abnehmbar und/oder trennbar ist.
- in der für messtechnische Zwecke nützliche Parameter unveränderbar gespeichert sind,
- und **dadurch gekennzeichnet, dass**: der mindestens eine Speicher (6), der extern und unabhängig von dem zweiten Modul (20) ist, elektronisch mit der externen elektronischen Verarbeitungs- und/oder Steuereinheit (25) des zweiten Moduls (20) außerhalb des Sicherheitsgehäuse (7) verbunden ist, um Informationen zu empfangen und zu speichern, die von der externen elektronischen Verarbeitungs- und/oder Steuereinheit (25) des zweiten Moduls (20) verarbeitet werden und sich auf den Betrieb des Geräts (1) beziehen,
- die externe elektronische Verarbeitungs- und/oder Steuereinheit (25) des zweiten Moduls (20) so konfiguriert ist, dass sie während des normalen Betriebs des Geräts die Informationen, die sich auf den Betrieb des Geräts (1) beziehen, an die mindestens eine Speichereinheit (6) sendet, wodurch die Speicherung der Informationen in der mindestens einen Speichereinheit (6) ermöglicht wird.

2. Gerät nach Anspruch 1, **dadurch gekennzeichnet, dass** die mindestens eine Speichereinheit (6) im Inneren des Sicherheitsgehäuse (7) untergebracht ist.

3. Gerät nach Anspruch 1, **dadurch gekennzeichnet, dass** die mindestens eine Speichereinheit (6) außen an dem Sicherheitsgehäuse (7) befestigt ist, so dass das zweite Modul (20) unabhängig von der mindestens einen Speichereinheit (6) von dem Sicherheitsgehäuse (7) abnehmbar und/oder trennbar ist.

4. Gerät nach dem vorstehenden Anspruch, **dadurch gekennzeichnet, dass** keine elektrische und/oder elektronische Komponente innerhalb des Sicherheitsgehäuses (7) untergebracht ist.

5. Gerät nach Anspruch 1 oder 2, **dadurch gekennzeichnet, dass** die mindestens eine Speichereinheit (6) in dem Sicherheitsgehäuse (7) innerhalb des ersten Moduls (4) untergebracht ist.

6. Gerät nach Anspruch 1 oder 2, **dadurch gekennzeichnet, dass** die mindestens eine Speichereinheit (6) innerhalb des Sicherheitsgehäuses (7), aber außerhalb des ersten Moduls (4) untergebracht ist.

7. Gerät nach einem oder mehreren der vorstehenden Ansprüche, **dadurch gekennzeichnet, dass** die mindestens eine Speichereinheit (6) mit mindestens einem Siegel (12) zur Gewährleistung/Schutz ihrer Unversehrtheit und Manipulationssicherheit verbunden und/oder versehen ist.

8. Gerät nach einem oder mehreren der vorstehenden Ansprüche, **dadurch gekennzeichnet, dass** die mindestens eine Speichereinheit (6) umfasst:
- einen ersten beschreibbaren und/oder wiederbeschreibbaren Bereich (8), in dem die Informationen über den Betrieb des Geräts (1), vorzugsweise über die Werte der Volumenzähler, Diagnoseinformationen und/oder andere Informationen über bestimmte Ereignisse, gespeichert sind, und
- einen zweiten schreibgeschützten Bereich (10), in dem die für messtechnische Zwecke nützlichen Parameter unveränderbar gespeichert sind.

9. Gerät nach Anspruch 8, **dadurch gekennzeichnet, dass** in dem zweiten schreibgeschützten Bereich (10) der mindestens einen Speichereinheit (6) auch Identifikations- und/oder Herstellungsparameter des Geräts (1) unveränderbar gespeichert sind.

10. Gerät nach Anspruch 8 oder Anspruch 9, **dadurch gekennzeichnet, dass** in der mindestens einen Speichereinheit (6), vorzugsweise im ersten beschreibbaren und/oder wiederbeschreibbaren Bereich (8), gespeichert sind:
- die von dem mindestens einen Sensor (2) erfassten Daten und
- die Ergebnisse der Verarbeitung, die von der externen elektronischen Einheit (25), ausgehend von den von dem mindestens einen Sensor erfassten Daten durchgeführt wird, und
- Ereignisse im Zusammenhang mit der Funktionsweise des Geräts (1).

11. Gerät nach einem der Ansprüche 8, 9 oder 10, **dadurch gekennzeichnet, dass** der Inhalt des ersten beschreibbaren und/oder wiederbeschreibbaren Bereichs (8) und/oder des zweiten schreibgeschützten Bereichs (10) durch Verschlüsselung geschützt ist.

12. Gerät nach einem oder mehreren der vorstehenden Ansprüche, **dadurch gekennzeichnet, dass** die externe elektronische Verarbeitungs- und/oder Steuereinheit (25) des zweiten Moduls (20) so konfiguriert ist, dass sie aufgrund ihrer Verbindung mit dem ersten Modul (4) und/oder der gesamten mindestens einen Speichereinheit (6) den Inhalt der in der mindestens einen Speichereinheit (6) vorhandenen Parameter und Informationen - vorzugsweise automatisch - liest und erfasst.

13. Gerät nach einem oder mehreren der vorstehenden Ansprüche, **dadurch gekennzeichnet, dass** der mindestens eine der ersten Sensoren (2) des Moduls (4) vom mechanischen Typ ist, vorzugsweise eine Membran, und ein mechanisches System umfasst, das innerhalb des Sicherheitsgehäuses (7) untergebracht ist, in das das Gas eintritt und zirkuliert.

14. Gerät nach einem oder mehreren der vorstehenden Ansprüche, **dadurch gekennzeichnet, dass** das zweite Modul (20) in seinem Inneren umfasst:
- eine elektrische Energiequelle (27) für die Komponenten des zweiten Moduls (20) und/oder für die Komponenten des ersten Moduls (4) und/oder
- eine Benutzerschnittstelle (16), die so konfiguriert ist, dass sie es dem Benutzer ermöglicht, mit dem Gerät (1) zu interagieren und die von der externen elektronischen Einheit (25) des zweiten Moduls (20) empfangenen und/oder verarbeiteten Daten anzuzeigen,
- Fernkommunikationsmittel (23) zur Interaktion mit einem externen tragbaren Gerät und/oder mit einer entfernten Einheit.

15. Gerät nach einem oder mehreren der vorstehenden Ansprüche, **dadurch gekennzeichnet, dass** die mindestens eine Speichereinheit (6) so konfiguriert ist, dass das Lesen und Anzeigen ihres Inhalts dem Passieren eines Authentifizierungssystems, wie eines Passworts, unterliegt.

## Revendications

1. Appareil (1) de mesure de gaz (30), en particulier du type approprié pour mesurer l'écoulement de gaz (30) présent et circulant au sein d'un conduit, comprenant :
- un boîtier de confinement (7) muni d'une première ouverture (9) pour l'entrée de gaz à l'intérieur de celui-ci et d'une seconde ouverture (11) pour la sortie de gaz,
- un premier module (4) qui est logé à l'intérieur dudit boîtier de confinement (7) et qui comprend au moins un capteur (2) pour détecter une quantité correspondante de l'écoulement de gaz (30) qui traverse et/ou circule dans ledit appareil (1),
- un second module (20) qui est associé de manière externe audit boîtier de confinement (7),
- une seule et unique unité de traitement et/ou de commande qui est définie par une unité de traitement et/ou de commande électronique externe (25) qui est logée dans ledit second module (20) et qui est électroniquement connectée audit au moins un capteur (2) pour ainsi recevoir les détections effectuées par ledit au moins un capteur (2),
- au moins une unité de mémoire (6) :
- qui est externe et indépendante dudit second module (20) de sorte que ledit second module (20) soit amovible et/ou dissociable dudit boîtier de confinement (7) indépendamment de ladite au moins une unité de mémoire (6).
- dans lequel des paramètres utiles à des fins métrologiques sont stockés d'une manière non modifiable,
- et **caractérisé en ce que** : ladite au moins une mémoire (6), qui est externe et indépendante dudit second module (20), est électroniquement connectée avec l'unité de traitement et/ou de commande électronique externe (25) dudit second module (20) externe au boîtier de confinement (7), pour recevoir et stocker des informations traitées par ladite unité de traitement et/ou de commande électronique externe (25) dudit second module (20) et se rapportant au fonctionnement dudit appareil (1),
- l'unité de traitement et/ou de commande électronique externe (25) du second module (20) est configurée de sorte que, au cours d'un fonctionnement normal de l'appareil, elle envoie les informations se rapportant au fonctionnement de l'appareil (1) à l'au moins une unité de mémoire (6), ce qui permet le stockage desdites informations dans ladite au moins une unité de mémoire (6).

2. Appareil selon la revendication 1, **caractérisé en ce que** l'au moins une unité de mémoire (6) est logée à l'intérieur du boîtier de confinement (7).

3. Appareil selon la revendication 1, **caractérisé en ce que** l'au moins une unité de mémoire (6) est fixée de manière externe audit boîtier de confinement (7) de sorte que ledit second module (20) devienne amovible et/ou séparable dudit boîtier de confinement (7) indépendamment de ladite au moins une unité de mémoire (6).

4. Appareil selon la revendication précédente, **caractérisé en ce qu'**aucun composant électrique et/ou électronique n'est logé à l'intérieur dudit boîtier de confinement (7).

5. Appareil selon les revendications 1 ou 2, **caractérisé en ce que** ladite au moins une unité de mémoire (6) est logée au sein dudit boîtier de confinement (7), à l'intérieur dudit premier module (4).

6. Appareil selon les revendications 1 ou 2, **caractérisé en ce que** ladite au moins une unité de mémoire (6) est logée à l'intérieur dudit boîtier de confinement (7) mais à l'extérieur dudit premier module (4).

7. Appareil selon l'une ou plusieurs des revendications précédentes, **caractérisé en ce que** ladite au moins une unité de mémoire (6) est associée avec et/ou munie d'au moins un sceau (12) pour la garantie/protection de son intégrité et de sa non altération.

8. Appareil selon l'une ou plusieurs des revendications précédentes, **caractérisé en ce que** ladite au moins une unité de mémoire (6) comprend :
- une première zone inscriptible et/ou réinscriptible (8) dans laquelle lesdites informations se rapportant au fonctionnement de l'appareil (1) sont stockées, de préférence se rapportant aux valeurs des totalisateurs de volume, à des informations de diagnostic et/ou à d'autres informations liées à des événements particuliers, et
- une seconde zone en lecture seule (10) dans laquelle lesdits paramètres utiles à des fins métrologiques sont stockés d'une manière non modifiable.

9. Appareil selon la revendication 8, **caractérisé en ce que**, dans ladite seconde zone en lecture seule (10) de ladite au moins une unité de mémoire (6), sont également stockés, d'une manière non modifiable, des paramètres d'identification et/ou de fabrication dudit appareil (1).

10. Appareil selon la revendication 8 ou la revendication 9, **caractérisé en ce que**, dans ladite au moins une unité de mémoire (6), et de préférence dans ladite première zone inscriptible et/ou réinscriptible (8), sont stockés :
- les données détectées par ledit au moins un capteur (2), et
- les résultats du traitement effectué par ladite unité électronique externe (25) en commençant à partir des données détectées par ledit au moins un capteur, et
- des événements liés au fonctionnement opérationnel de l'appareil (1).

11. Appareil selon l'une des revendications 8, 9 ou 10, **caractérisé par le fait que** le contenu de ladite première zone inscriptible et/ou réinscriptible (8) et/ou de ladite seconde zone en lecture seule (10) est protégé par chiffrement.

12. Appareil selon l'une ou plusieurs des revendications précédentes, **caractérisé par le fait que** l'unité de traitement et/ou de commande électronique externe (25) du second module (20) est configurée de sorte que, en conséquence de sa connexion au premier module (4) et/ou à la totalité de l'au moins une unité de mémoire (6), elle lit et acquiert - de préférence automatiquement - le contenu des paramètres et des informations présents dans ladite au moins une unité de mémoire (6).

13. Appareil selon l'une ou plusieurs des revendications précédentes, **caractérisé en ce que** ledit au moins un dudit premier capteur (2) dudit module (4) est de type mécanique, de préférence une membrane, et comprend un système mécanique qui est logé à l'intérieur dudit boîtier de confinement (7) dans lequel le gaz entre et circule.

14. Appareil selon l'une ou plusieurs des revendications précédentes, **caractérisé en ce que** ledit second module (20) comprend dans son intérieur :
- une source d'énergie électrique (27) pour les composants du second module (20) et/ou pour les composants du premier module (4), et/ou
- une interface utilisateur (16) configurée pour permettre à l'utilisateur d'interagir avec ledit dispositif (1) et de visualiser les données reçues et/ou traitées par ladite unité électronique externe (25) du second module (20),
- des moyens de communication à distance (23) pour interagir avec un dispositif portable externe et/ou avec une unité à distance.

15. Appareil selon l'une ou plusieurs des revendications précédentes, **caractérisé en ce que** l'au moins une unité de mémoire (6) est configurée d'une manière telle que la lecture et l'affichage de son contenu est soumis à un passage avec succès par un système d'authentification, tel qu'un mot de passe.
